# EUROPÄISCHE PATENTSCHRIFT

(11) **EP 1 611 795 B1**
(45) Veröffentlichungstag und Bekanntmachung des Hinweises auf die Patenterteilung: **14.11.2007**
(21) Anmeldenummer: 05450096.2
(22) Anmeldetag: 31.05.2005
(51) Int. Cl.: A23J 1/20, A23C 21/00, A23K 1/08, A23C 19/09, A23C 19/076, A23L 1/305, A23L 1/00

(54) **Verfahren zur Herstellung eines Proteinkonzentrats aus Sauermolke sowie Verwendung eines derartigen Proteinkonzentrats**
Method for manufacture of a protein concentrate from acid whey and its use
Méthode de fabrication de concentre de protéines de petit-lait acide et leur utilisation

(30) Priorität: 02.07.2004 AT 4672004
(43) Veröffentlichungstag der Anmeldung: 04.01.2006
(73) Patentinhaber: Landfrisch Molkerei registrierte Genossenschaft mit beschränkter Haftung, 4600 Wels (AT)
(72) Erfinder: Wöllinger, Johann, 4870 Vöcklamarkt (AT); Altendorfer, Herbert, 4132 Lembach (AT)
(74) Vertreter: Miksovsky, Alexander

(56) Entgegenhaltungen:
- EP-A- 0 311 283
- EP-A- 1 046 344
- WO-A-95/17830
- GB-A- 2 130 069
- US-A- 3 930 039
- US-A- 4 361 588
- US-A- 5 580 592
- US-B1- 6 558 716
- GRUETZMACHER T J ET AL: "ACID WHEY AS A REPLACEMENT FOR SODIUM CASEINATE IN SPRAY-DRIED COFFEE WHITENERS1" JOURNAL OF DAIRY SCIENCE, AMERICAN DAIRY SCIENCE ASSOCIATION, SAVOY, IL, US, Bd. 74, Nr. 9, 1. September 1991 (1991-09-01), Seiten 2838-2849, XP000228098 ISSN: 0022-0302
- "'SUPER PROTEIN' FROM ACID-WHEY" FOOD ENGINEERING, ALBANY, NY, US, Bd. 54, Nr. 3, März 1982 (1982-03), Seiten 96-97, XP000953542 ISSN: 0015-637X
- URBIENE S ET AL: "DETERMINATION OF THE INFLUENCE OF SOME TECHNOLOGICAL FACTORS ON THECONTENT OF SH-GROUPS IN WHEY PROTEIN CONCENTRATE OBTAINED BY ULTRAFILTRATION" MILCHWISSENSCHAFT, VV GMBH VOLKSWIRTSCHAFTLICHER VERLAG. MUNCHEN, DE, Bd. 51, Nr. 2, 1996, Seiten 85-87, XP000555360 ISSN: 0026-3788

## Beschreibung

Die vorliegende Erfindung bezieht sich auf Verfahren zur Herstellung eines Proteinkonzentrats aus Sauermolke sowie auf eine Verwendung eines derartigen Proteinkonzentrats.

Aus der US-A -5 580 592 ist ein Verfahren zum Sprühtrocknen von Sauermolke, Sauerpermeat und Mischungen davon bekannt geworden, wobei darauf abgezielt wird, ein derartiges verfahren zum Sprühtrocknen zu verbessern, wobei ein Milchprodukt gelagert wird, um eine Kristallisation von Laktose zu ermöglichen und nachfolgend das Milchprodukt einem Sprühtrocknen unterworfen wird. Aus der US-A-4 361 588 ist ein Nahrungsmittelprodukt bekannt geworden, wobei darauf abgezielt wird, eine Mischung von eßbaren bzw. für einen Verzehr geeigneten Proteinpartikeln ausgehend von einem Molkeprodukt zur Verfügung zu stellen. Der GB-A-2 130 069 ist ein Verfahren zum Behandeln von Molke zu entnehmen, wobei allgemein auf die Behandlung von Käsemolke und auf modifizierte Molkeprodukte abgezielt wird, welche aus derartigen Prozessen resultieren. Der US-A-3 930 039 ist ein Verfahren zum Vorbereiten bzw. Herstellen eines Proteinkonzentrats aus Molke zu entnehmen, wobei ebenso wie wenigstens teilweise bei den vorangehenden Verfahren unter Einsatz einer Ultrafiltration ein Proteinkonzentrat aus Molke hergestellt werden soll. In ähnliche Weise bezieht sich die EP-A-1 046 344 auf ein Molkeproteinkonzentrat und auf ein Verfahren zur Herstellung desselben, wobei wieder durch Ultrafiltration eine Abtrennung eines Filtrats erzielt werden soll. In ähnlicher Weise offenbart die EP-A-0 311 283 ein Verfahren zum Erhalten von Konzentraten mit einem hohen α-Laktalbumin-Gehalt aus Molke unter Einsatz einer Ultrafiltration. Der US-B1-6 558 716 ist darüber hinaus ein Verfahren zum Aufnehmen von Molkeproteinen in Käse zu entnehmen, um die Qualität eines derartigen Käses insbesondere im Hinblick auf den Nährwert als auch die Konsistenz des Käses zu verbessern. Aus der WO 95/17830 ist ein Verfahren zum Herstellen eines Molkeproteinkonzentrats zu entnehmen, wobei wiederum unter Einsatz einer Ultrafiltration ein hoher SerumAlbumin-Gehalt erzielt werden soll. Aus GRUETZMACHER T J ET AL: "ACID WHEY AS A REPLACEMENT FOR SODIUM CASEINATE IN SPRAY-DRIED COFFEE WHITENERS" JOURNAL OF DAIRY SCIENCE, AMERICAN DAIRY SCIENCE ASSOCIATION, SAVOY, IL, US, Bd. 74, Nr. 9, 1. September 1991 (1991-09-01), Seiten 2838-2849, XP000229098 ISSN: 0022-0302, ist es bekannt geworden, Sauermolke als Ersatzmittel in sprühgetrockneten Kaffeeaufhellungsmitteln zu verwenden, wobei die Sauermolke wiederum durch Ultrafiltration behandelt wird. Aus "'SUPER PROTEIN' FROM ACID-WHEY" FOOD ENGINEERING, ALBANY, NY, US, Bd. 54, Nr. 3, März 1982 (1982-03), Seiten 96-97, XP000953542 ISSN:0015-637X ist bekannt geworden, aus Sauermolke ein reines Proteinpulver herzustellen und in der Nahrungsmittelindustrie einzusetzen. Aus URBIENE S ET AL: "DETERMINATION OF THE INFLUENCE OF SOME TECHNOLOGICAL FACTORS ON THE CONTENT OF SH-GROUPS IN WHEY PROTEIN CONCENTRATE OBTAINED BY ULTRAFILTRATION" MILCHWISSENSCHAFT, VV GMBH VOLKSWIRT-SCHAFTLICHER VERLAG, MÜNCHEN, DE, Bd. 51, Nr. 2, 1996, Seiten 85-87, XP000555360 ISSN: 0026-3788 sind unterschiedliche verfahren einer Gewinnung von Molkeproteinkonzentrat unter Einsatz von Ultrafiltration bekannt.

Proteine aus Molke sind wertvolle Bestandteile derselben und werden in unterschiedlichen Bereichen, insbesondere in konzentrierter Form, beispielsweise in der Lebensmittelindustrie eingesetzt. Im einfachsten Fall finden Molkenproteine als Bestandteile von Molkenkonzentraten Verwendung, welche im wesentlichen Gemische aus Molkenproteinen, Lactose und Salzen sind. Weiters sind veredelte Molkenkonzentrate bzw. Proteinkonzentrate bekannt, welche im Gegensatz zu reinen Molkenkonzentraten beispielsweise weniger Lactose und Salze beinhalten. Darüber hinaus ist es bekannt, Konzentrate von bestimmten Molkenproteingemischen oder auch einzelnen Molkenproteinen in gereinigter Form bereitzustellen und einzusetzen. In diesem Zusammenhang ist es beispielsweise bekannt, wenigstens teilweise zerkleinerte bzw. partikulierte Molkenproteinkonzentrate herzustellen, wobei allgemein auf eine spezielle Größe bzw. Größenverteilung derartiger Proteinkonzentrate für spezielle Einsatzzwecke abgezielt wird. Während eine derartige Behandlung bei Süßmolke teilweise bekannt und leicht durchführbar ist, ist davon auszugehen, daß Verfahrensschritte, welche beispielsweise bei der Behandlung von Süßmolke wenigstens für sich gesehen bekannt sind, aufgrund des gegenüber Süßmolke verringerten pH-Werts als auch des erhöhten Salzgehalts sowie des Vorhandenseins von Milchsäure, welche in Süßmolke in dieser Form nicht enthalten ist, als auch einer gegenüber Süßmolke veränderten Proteinzusammensetzung derartige Behandlungsschritte bei Sauermolke nicht unmittelbar einsetzbar sind.

Es wird daher darauf abgezielt, ein Verfahren zur Herstellung eines Proteinkonzentrats aus Sauermolke zur Verfügung zu stellen, mit welchem es gelingt, unter Berücksichtigung der spezifischen Eigenschaften von Sauermolke eine Konzentrierung von in Sauermolke enthaltenen Molkenproteinen und eine anschließende Bereitstellung einer gewünschten Größe bzw. Größenverteilung derartiger Proteine bzw. eines derartigen Proteinkonzentrats für eine Weiterverarbeitung zur Verfügung zu stellen.

Zur Lösung dieser Aufgaben ist das erfindungsgemäße Verfahren zur Herstellung eines Proteinkonzentrats aus Sauermolke der eingangs genannten Art im wesentlichen gekennzeichnet durch die folgenden Schritte:
- Filtrieren der Sauermolke unter Verwendung wenigstens einer selektiven Membran zur Abtrennung von Proteinanteilen bzw. Molkenproteinen, wobei das Filtrieren der Sauermolke mittels Nanofiltration vorgenommen wird,
- Wärmebehandeln der beim Filtrieren zurückgehaltenen Inhaltsstoffe, und
- Zerkleinern der wärmebehandelten Inhaltsstoffe in Partikel bzw. Teilchen mit einer bestimmten, mittleren Teilchengröße.

Dadurch, daß erfindungsgemäß ein Filtrieren der Sauermolke unter Verwendung wenigstens einer selektiven Membran zur Abtrennung von Proteinanteilen bzw. Molkenproteinen erfolgt, läßt sich eine entsprechende Einstellung der Filtrationseigenschaften, insbesondere durch geeignete Auswahl der Membran, und somit des Ausmaßes der während der Filtration zurückzuhaltenden Proteinanteile bzw. Molkenproteine in einfacher Weise zur Verfügung stellen. Es läßt sich durch Einsatz einer selektiven Membran weiters ermöglichen, daß die Durchlässigkeit bzw. Rückhaltefähigkeit der Membran beispielsweise auch unter Berücksichtigung der Herkunft der Sauermolke eingestellt wird, da beispielsweise bei Cottage-Sauermolke ein Anteil von etwa 25 % der Molkenproteine beispielsweise bei Einsatz einer zur Verarbeitung von Süßmolke bekannten Ultrafiltration verloren geht, wobei dieser Prozentsatz an nicht nutzbaren Molkenproteinen für Topfenmolke auf bis zu 50 % ansteigen kann. Dies ist insbesondere bei Sauermolke von Relevanz, da bei einer Fermentierung kleinere Peptide bzw. gespaltene Proteine entstehen, welche eine entsprechende Auswahl bzw. Einstellung der Rückhaltefähigkeit bei der Filtration erfordern. Es ist davon auszugehen, daß derartige Verluste bei Einsatz von beispielsweise für die Behandlung von Süßmolke bekannten Filtrationsmethoden insbesondere durch Hydrolyse von Proteinen im sauren Milieu hervorgerufen werden, da durch eine teilweise Spaltung der Proteine in vorangeschalteten Behandlungsschritten vor Bereitstellung der Sauermolke kleinere Bestandteile entstehen, welche bei Einsatz von bekannten Filtrationsverfahren nicht entsprechend zurückgehalten und somit auch nicht konzentriert werden können. Es ist erfindungsgemäß wesentlich, daß eine Filtration unter Verwendung einer selektiven Membran mittels Nanofiltration erfolgt, wobei die Durchlässigkeit der Membran in Abhängigkeit von der Molmasse von Inhaltsstoffen der Sauermolke und somit in Abhängigkeit von dem Ausgangsprodukt bzw. Basisprodukt, aus welchen die weiter zu verarbeitende Sauermolke resultiert, eingestellt wird. Nachfolgend auf die Filtration unter Verwendung wenigstens einer selektiven Membran erfolgt eine Wärmebehandlung der beim Filtrieren zurückgehaltenen Inhaltsstoffe für eine zumindest weitestgehende Denaturierung der Molkenproteine, wobei eine Agglomerierung auftritt. Für die Erzielung einer gewünschten Größe bzw. Größenverteilung der erhaltenen konzentrierten und insbesondere denaturierten Proteine für eine Weiterverarbeitung wird darüber hinaus erfindungsgemäß vorgeschlagen, daß eine Zerkleinerung der wärmebehandelten Inhaltsstoffe in Partikel bzw. Teilchen mit einer bestimmten, mittleren Teilchengröße oder einer definierten bzw. definierbaren Größe und/oder Größenverteilung vorgenommen wird.

Zur Erzielung eines entsprechend hohen Filtrationseffekts bzw. Filtrationsgrads zur möglichst weitestgehenden Nutzung der in der zu behandelnden Sauermolke enthaltenen Inhaltsstoffe, insbesondere der Molkenproteine, wird erfindungsgemäß vorgeschlagen, daß das Filtrieren der Sauermolke mittels Nanofiltration vorgenommen wird. Durch ein derartiges Filtrieren mittels Nanofiltration kann der Tatsache Rechnung getragen werden, daß in Sauermolke entsprechend kleinere Bestandteile der Molkenproteine, insbesondere Peptide, enthalten sind, so daß durch Einsatz einer Nanofiltration ein entsprechend verbesserter Rückhalte- und somit Filtrationseffekt der zu filtrierenden Inhaltsstoffe erzielt werden kann.

Zur Erzielung bzw. Unterstützung des gewünschten Filtrationseffekts und unter Berücksichtigung der üblicherweise in Sauermolke enthaltenen Inhaltsstoffe wird gemäß einer weiters bevorzugten Ausführungsform vorgeschlagen, daß die Membran mit einer Rückhaltefähigkeit für Inhaltsstoffe mit einer Molmasse größer 200 kg/kMol, insbesondere größer etwa 1.000 kg/kMol, verwendet werden. Derart wird sichergestellt, daß die gewünschten Inhaltsstoffe zur Bereitstellung des Proteinkonzentrats weitestgehend zurückgehalten werden, während im Proteinkonzentrat nicht gewünschte Inhaltsstoffe, wie insbesondere Lactose oder Salze die Membran passieren können und somit eine gegebenenfalls nachteilige Beeinflussung des herzustellenden Proteinkonzentrats durch diese bei der Filtration hindurchgetretenen und ursprünglich in der Sauermolke enthaltenen Inhaltsstoffe vermieden wird.

Zur Erzielung eines entsprechend weiter verarbeitbaren Produkts wird gemäß einer weiters bevorzugten Ausführungsform vorgeschlagen, daß bei der Filtration ein Proteingehalt von wenigstens 30 %, insbesondere 50 bis 60 %, an der Trockenmasse erreicht wird.

Wie bereits oben ausgeführt, ist wesentlich, daß ein entsprechend hoher Anteil der in der zu behandelnden Sauermolke enthaltenen Molkenproteine zur Bereitstellung einer entsprechenden Menge eines Molkenproteinkonzentrats zurückgehalten bzw. filtriert werden, wobei in diesem Zusammenhang vorgeschlagen wird, daß bei der Filtration wenigstens 60 %, insbesondere wenigstens 80 %, der in der Sauermolke enthaltenen Proteine zurückgehalten werden, wie dies einer weiters bevorzugten Ausführungsform des erfindungsgemäßen Verfahrens entspricht.

Zur Erzielung von durchgehend bzw. homogen denaturierten Produkten und um ein Anhaften der beim Filtrieren zurückgehaltenen Inhaltsstoffe bei der Wärmebehandlung beispielsweise in einem Wärmetauscher zu verhindern, wird gemäß einer weiters bevorzugten Ausführungsform vorgeschlagen, daß die Wärmebehandlung unter mechanischer Beanspruchung insbesondere unter Einwirkung von Scherkräften auf die beim Filtrieren zurückgehaltenen Inhaltsstoffe erfolgt.

Zur Erzielung der gewünschten Denaturierung und Agglomerierung der im Filtrationsschritt zurückgehaltenen Molkeninhaltsstoffe wird gemäß einer weiters bevorzugten Ausführungsform vorgeschlagen, daß die Wärmebehandlung bei einer Temperatur zwischen 60 und 120 °C, insbesondere zwischen 70 und 100 °C, vorgenommen wird.

Wie oben bereits angeführt, ist für eine weitere Verwendung bzw. Verarbeitung der herzustellenden Proteinkonzentrate eine bestimmte Größe und/oder Größenverteilung in vielen Fällen von wesentlicher Bedeutung, wobei die Größe der herzustellenden Agglomerate unter anderem durch die Dauer der Wärmebehandlung beeinflußt wird. In diesem Zusammenhang wird gemäß einer weiters bevorzugten Ausführungsform vorgeschlagen, daß die Wärmebehandlung über einen Zeitraum von höchstens einer Stunde, insbesondere von etwa 20 s bis 30 min, durchgeführt wird. Es gelingt somit durch Einstellen entsprechender Behandlungsdauer, insbesondere der Dauer der Wärmebehandlung, gegebenenfalls unter gleichzeitiger Berücksichtigung der anzuwendenden Temperatur, gewünschte Größen und/oder Denaturierungsgrade der Molkenproteine von Agglomeraten bereitzustellen, welche im nachfolgenden Zerkleinerungsschritt entsprechend weiterbehandelt werden können bzw. den Weiterbehandlungsschritt einer Zerkleinerung durch Bereitstellung einer abgestimmten bzw. gewünschten Größenverteilung während der Wärmebehandlung vereinfachen und somit beschleunigen können.

Für eine Verwendung der erfindungsgemäß hergestellten Proteinkonzentrate insbesondere im Bereich der Lebensmittelindustrie wird vorgeschlagen, daß eine mittlere Teilchengröße der zerkleinerten Teilchen im Bereich zwischen 0,1 und 50 *µ*m erreicht wird, wie dies einer weiters bevorzugten Ausführungsform des erfindungsgemäßen Verfahrens entspricht. Durch Einstellung einer mittleren Teilchengröße in dem angegebenen Bereich können die hergestellten Proteinkonzentrate beispielsweise für eine Schaumstabilisierung bzw. zur Erzielung einer gewünschten Schaumfähigkeit, zur Verbesserung des Geschmacks, der Konsistenz, der Wasserbindefähigkeit, der Cremigkeit und dgl. eines Produkts eingesetzt werden. In diesem Zusammenhang wird besonders bevorzugt vorgeschlagen, das erfindungsgemäß hergestellte Proteinkonzentrat als Zugabe bei der Herstellung von Lebensmitteln, insbesondere von Frischkäse, milchhaltigen Dessertprodukten, Backwaren, Süßwaren oder von Futtermitteln zu verwenden. Es kann sich bei den Frischkäsesorten und/oder milchhaltigen Dessertprodukten jeweils um aufgeschäumte oder nicht aufgeschäumte Produkte handeln, wobei zur Erzielung der gewünschten Produkteigenschaften insbesondere eine Zerkleinerung der herzustellenden Proteinkonzentratprodukte in den angegebenen Größenbereich erwünscht wird.

Die Erfindung wird nachfolgend anhand von beispielhaften Ausführungsformen einer Verfahrensführung als auch von beispielhaften Ausführungsbeispielen näher beschrieben. In dieser zeigen:
Fig. 1 schematisch ein Flußdiagramm, welchem einzelne Schritte einer erfindungsgemäßen Verfahrensführung zu entnehmen sind; und
Fig. 2 ein detaillierteres Flußdiagramm zur Durchführung einer abgewandelten, erfindungsgemäßen Verfahrensführung.

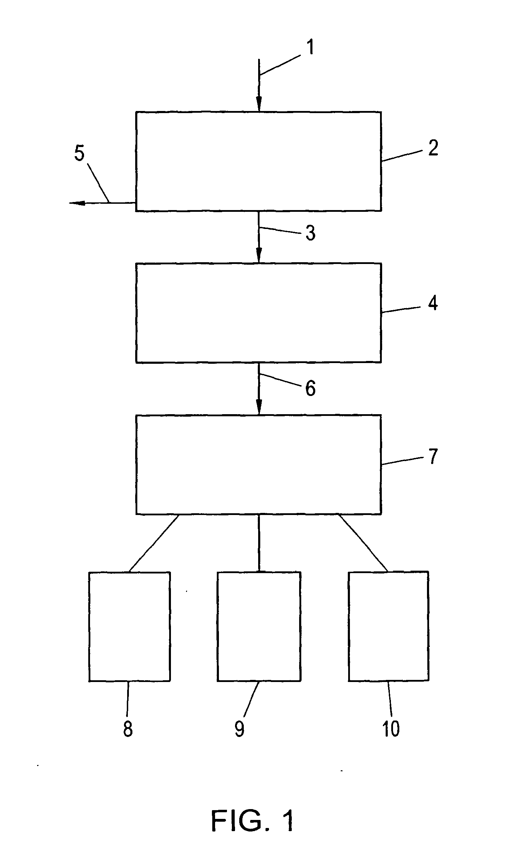

Aus einem nicht näher dargestellten Herstellungsprozeß für Sauermolke in Fig. 1 wird entsprechend dem Pfeil 1 Sauermolke einer Filtrationsstufe 2 zugeführt, in welcher unter Verwendung einer selektiven Membran, insbesondere mittels Nanofiltration oder feinporiger Ultrafiltration eine Filtration bzw. Aufkonzentrierung von in der Sauermolke enthaltenen Molkenproteinen erfolgt.

Die konzentrierten Molkeproteine werden aus der Filtrationsstufe 2 entsprechend dem Pfeil 3 einer Wärmebehandlungsstufe 4 zugeführt, in welcher unter einer gegenüber Umgebungstemperatur erhöhten Temperatur von insbesondere 70 bis 100 °C eine Wärmebehandlung zur Agglomerierung der in der Filtrationsstufe 2 zurückgehaltenen Molkenproteine für einen Zeitraum von einigen Sekunden bis insbesondere 30 Minuten durchgeführt wird. Gegebenenfalls wird eine schnelle Erhitzung und/oder ein rascher Wärmeübergang angestrebt.

Aus der Filtrationsstufe 2 werden entsprechend dem Pfeil 5 die nicht zurückgehaltenen Produkte sowie der verbleibende Anteil der Sauermolke ausgebracht.

Nach der Wärmebehandlungsstufe 4 werden die agglomerierten konzentrierten Inhaltsstoffe, insbesondere Molkenproteine entsprechend dem Pfeil 6 einer Zerkleinerungsstufe 7 zugeführt, in welcher eine Zerkleinerung der agglomerierten und denaturierten Inhaltsstoffe bzw. Proteinkonzentrate der Sauermolke auf eine gewünschte Größe und/oder Größenverteilung vorgenommen wird.

Entsprechend der im Rahmen der Zerkleinerungsstufe 7 hergestellten zerkleinerten Molkenproteine bzw. Proteinkonzentrate erfolgt eine Verwendung zur Herstellung von Lebensmittelprodukten, wobei unterschiedliche Produkte mit 8, 9 und 10 in der Figur angedeutet sind. Diese Produkte können beispielsweise Frischkäse, milchhaltige Dessertprodukte, aufgeschäumte Lebensmittelprodukte und dgl. darstellen.

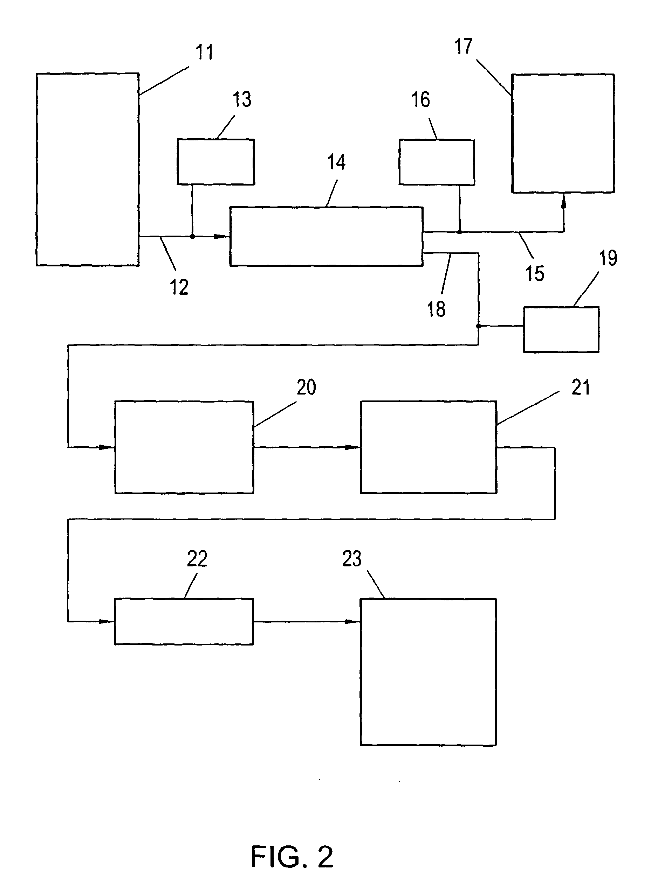

Bei der Ausführungsform gemäß Fig. 2 einer abgewandelten Verfahrensführung ist mit 11 ein Tank bzw. Stapeltank für Sauermolke bezeichnet, wobei entsprechend dem Pfeil 12 schematisch mit 13 angedeutete Sauermolke wiederum einem Filtrationsschritt bei 14 unterworfen wird, wobei eine feinporige Ultrafiltration oder Nanofiltration vorgenommen wird. Bei 15 wird aus dem Filtrationsschritt 14 Permeat 16 abgezogen und einem Tank 17 zugeführt.

Aus der Filtrationsstufe 14 wird darüber hinaus bei 18 Retentat 19 abgezogen, welches einem ersten Wärmetauscher 20 zugeführt wird, worauf in einem nachgeschalteten Wärmetauscher 21 eine Homogenisierung zur Erzielung von Partikeln bzw. Teilchen mit einer definierten bzw. definierbaren Größe und/oder Größenverteilung vorgenommen wird. Durch Ausbildung der Wärmetauscher 20 und 21 insbesondere als Schabe-Wärmetauscher wird neben einer Wärmebehandlung der beim Filtrieren zurückgehaltenen Inhaltsstoffe gleichzeitig eine mechanische Beanspruchung, insbesondere eine Scherbeanspruchung, auf diese ausgeübt.

Nach einer nachfolgenden Kühlung bei 22 wird ein zerkleinertes bzw. partikuliertes bzw. mikropartikuliertes Retentat bzw. Proteinkonzentrat bei 23 in einem Tank bzw. Behälter gelagert.

Aus dem Behälter bzw. Tank 23 kann ähnlich wie bei der Ausführungsform gemäß Fig. 1 eine Weiterverarbeitung zu unterschiedlichen Produkten erfolgen, welche in Fig. 1 mit 8, 9 bzw. 10 bezeichnet sind.

Im Bereich der Homogenisierung 21 wird ebenso wie bei der Ausführungsform gemäß Fig. 1 eine entsprechende Zerkleinerung zur Erzielung von Teilchen mit einer definierten bzw. definierbaren Größe vorgenommen.

Nachfolgend wird darüber hinaus anhand von detaillierten Ausführungsbeispielen die Behandlung von Sauermolke, welche aus unterschiedlichen Basisverfahren resultiert, zur Herstellung von Proteinkonzentraten unterschiedlicher Konsistenz und/oder Größe für eine Weiterverarbeitung bzw. -verwendung zur Herstellung von unterschiedlichen Produkten, insbesondere Lebensmittelprodukten, im Detail beschrieben.

### Beispiel 1: Verarbeitung von Sauermolke aus einer Cottagekäseproduktion

Nach einer Abtrennung des Käsestaubs von der Sauermolke erfolgt eine Kühlung der Sauermolke auf etwa 10 °C. Danach wird die Sauermolke einer Ultrafiltrationsanlage zugeführt. Anschließend erfolgt eine Konzentrierung des Retentats bzw. Molkenproteinkonzentrats auf eine Trockenmasse von etwa 17 %. Nach einem Erhitzen in einem ersten Wärmetauscher auf etwa 68 °C und einer Aufrecherhaltung der Temperatur für etwa 25 min werden die denaturierten Molkenproteinkonzentrate dem zweiten Wärmetauscher 21 in Fig. 2 zur Verfügung gestellt. Hiebei erfolgt darüber hinaus ein Zerkleinern der Partikel in diesem Wärmetauscher auf eine mittlere Teilchengröße von etwa 20 µm. Nach der Zerkleinerung wird ein Kühlen der zerkleinerten Partikel, welche eine definierte bzw. definierbare Größe bzw. Größenverteilung aufweisen, auf etwa 5 °C in diesem Wärmetauscher vorgenommen. Nachfolgend werden die partikulierten Molkenproteinkonzentrate in dem Tank 23 für eine Weiterverarbeitung bereitgestellt.

### Beispiel 2: Sauermolke aus einer gesamten Sauermilchkäserei (Cottage-Käse sowie Topfenproduktion)

Nach einer Abtrennung des Käsestaubs von der Sauermolke erfolgt eine Kühlung der Sauermolke auf etwa 10 °C. Danach wird die Sauermolke einer Nanofiltrationsanlage zugeführt. Anschließend erfolgt eine Konzentrierung des Retentats bzw. Molkenproteinkonzentrats auf eine Trockenmasse von etwa 18 %. Nach einem Erhitzen in einem ersten Wärmetauscher auf etwa 80 °C und einer Aufrecherhaltung der Temperatur für etwa 15 min werden die denaturierten Molkenproteinkonzentrate dem zweiten Wärmetauscher 21 in Fig. 2 zur Verfügung gestellt. Hiebei erfolgt darüber hinaus ein Zerkleinern der Partikel in diesem Wärmetauscher auf eine mittlere Teilchengröße von etwa 10 µm. Nach der Zerkleinerung wird ein Kühlen der zerkleinerten Partikel, welche eine definierte bzw. definierbare Größe bzw. Größenverteilung aufweisen, auf etwa 5 °C in diesem Wärmetauscher vorgenommen. Nachfolgend werden die partikulierten Molkenproteinkonzentrate in dem Tank 23 für eine Weiterverarbeitung bereitgestellt.

### Beispiel 3: Sauermolke aus der Topfenproduktion

Nach einer Abtrennung des Käsestaubs von der Sauermolke erfolgt eine Kühlung der Sauermolke auf etwa 10 °C. Danach wird die Sauermolke einer Ultrafiltrationsanlage zugeführt. Anschließend erfolgt eine Konzentrierung des Retentats bzw. Molkenproteinkonzentrats auf eine Trockenmasse von etwa 19 %. Nach einem Erhitzen in einem ersten Wärmetauscher auf etwa 95 °C und einer Aufrecherhaltung der Temperatur für etwa 1 min werden die denaturierten Molkenproteinkonzentrate dem zweiten Wärmetauscher 21 in Fig. 2 zur Verfügung gestellt. Hiebei erfolgt darüber hinaus ein Zerkleinern der Partikel in diesem Wärmetauscher auf eine mittlere Teilchengröße von etwa 5 *µ*m. Nach der Zerkleinerung wird ein Kühlen der zerkleinerten Partikel, welche eine definierte bzw. definierbare Größe bzw. Größenverteilung aufweisen, auf etwa 5 °C in diesem Wärmetauscher vorgenommen. Nachfolgend werden die partikulierten Molkenproteinkonzentrate in dem Tank 23 für eine Weiterverarbeitung bereitgestellt.

## Patentansprüche

1. Verfahren zur Herstellung eines Proteinkonzentrats aus Sauermolke, wobei ein Filtrieren (2, 14) der Sauermolke vorgenommen wird, wobei die Durchlässigkeit bzw. Rückhaltefähigkeit der Membran in Abhängigkeit von der Molmasse von Inhaltsstoffen der Sauermolke ausgewählt wird, **gekennzeichnet durch** die folgenden Schritte:
- Filtrieren (2, 14) der Sauermolke unter Verwendung wenigstens einer selektiven Membran zur Abtrennung von Proteinanteilen bzw. Molkenproteinen, wobei das Filtrieren (2, 14) der Sauermolke mittels Nanofiltration vorgenommen wird,
- wärmebehandeln (4, 20, 21) der beim Filtrieren zurückgehaltenen Inhaltsstoffe, und
- Zerkleinern (7, 21) der wärmebehandelten Inhaltsstoffe in Partikel bzw. Teilchen mit einer bestimmten, mittleren Teilchengröße.

2. Verfahren nach Anspruch 1, **dadurch gekennzeichnet, daß** die Membran mit einer Rückhaltefähigkeit für Inhaltsstoffe mit einer Molmasse größer 200 kg/kMol, insbesondere größer etwa 1.000 kg/kMol, verwendet werden.

3. Verfahren nach Anspruch 1 oder 2, **dadurch gekennzeichnet, daß** bei der Filtration (2, 14) ein Proteingehalt von wenigstens 30 %, insbesondere 50 bis 60 %, an der Trockenmasse erreicht wird.

4. verfahren nach einem der Ansprüche 1 bis 3, **dadurch gekennzeichnet, daß** bei der Filtration (2, 14) wenigstens 60 %, insbesondere wenigstens 80 %, der in der Sauermolke enthaltenen Proteine zurückgehalten werden.

5. Verfahren nach einem der Ansprüche 1 bis 4, **dadurch gekennzeichnet, daß** die Wärmebehandlung unter mechanischer Beanspruchung insbesondere unter Einwirkung von Scherkräften auf die beim Filtrieren zurückgehaltenen Inhaltsstoffe erfolgt.

6. Verfahren nach einem der Ansprüche 1 bis 5, **dadurch gekennzeichnet, daß** die Wärmebehandlung (4, 20, 21) bei einer Temperatur zwischen 60 und 120 °C, insbesondere zwischen 70 und 100 °C, vorgenommen wird.

7. Verfahren nach einem der Ansprüche 1 bis 6, **dadurch gekennzeichnet, daß** die Wärmebehandlung (4, 20, 21) über einen Zeitraum von höchstens einer Stunde, insbesondere von etwa 20 s bis 30 min, durchgeführt wird.

8. Verfahren nach einem der Ansprüche 1 bis 7, **dadurch gekennzeichnet, daß** eine mittlere Teilchengröße der zerkleinerten Teilchen im Bereich zwischen 0,1 und 50 µm erreicht wird.

9. Verwendung eines nach einem der Ansprüche 1 bis 8 hergestellten Proteinkonzentrats als Zugabe bei der Herstellung von Lebensmitteln, insbesondere von Frischkäse, milchhaltigen Dessertprodukten, Backwaren, Süßwaren oder von Futtermitteln.

## Claims

1. A method for producing a protein concentrate from acid whey by filtering (2, 14) the acid whey, wherein the permeability or retention capacity of the membrane is selected as a function of the molar mass of ingredients of the acid whey, **characterized by** the following steps:
- filtering (2, 14) the acid whey while using at least one selective membrane for separating protein portions or whey proteins, said filtering (2, 14) of the acid whey being realized by nanofiltration,
- heat-treating (4, 20, 21) the ingredients retained during filtering, and
- disintegrating (7, 21) the heat-treated ingredients into particles having defined mean particle sizes.

2. A method according to claim 1, **characterized in that** a membrane having a retention capacity for ingredients with a molar mass of 200 kg/kmol or more, in particular 1.000 kg/kmol, is used.

3. A method according to claim 1 or 2, **characterized in that** a protein content of at least 30%, in particular 50 to 60%, of the dry mass is achieved during filtering (2, 14).

4. A method according to any one of claims 1 to 3, **characterized in that** at least 60%, in particular 80%, of the proteins contained in the acid whey is retained during filtering (2, 14).

5. A method according to any one of claims 1 to 4, **characterized in that** heat-treating is realized while mechanically stressing, in particular exerting shearing forces on, the ingredients retained during filtering.

6. A method according to any one of claims 1 to 5, **characterized in that** said heat-treating (4, 20, 21) is realized at a temperature of between 60 and 120°C, in particular between 70 and 100°C.

7. A method according to any one of claims 1 to 5, **characterized in that** said heat-treating (4, 20, 21) is carried out over a period of a maximum of one hour, in particular about 20 s to 30 min.

8. A method according to any one of claims 1 to 7, **characterized in that** a mean particle size of between 0.1 and 50 µm of the disintegrated particles is obtained.

9. The use of a protein concentrate produced according to any one of claims 1 to 8 as an additive in the production of food products, in particular fresh cheese, milk-containing desserts, backed goods, confectionery or animal feed.

## Revendications

1. Procédé de fabrication d'un concentré de protéine à partir de petit-lait, dans lequel une filtration (2, 14) du petit-lait est réalisée, et dans lequel la perméabilité et/ou la capacité de rétention de la membrane est choisie en fonction de la masse molaire des composants du petit-lait, **caractérisé par** les étapes suivantes :
- filtration (2, 14) du petit-lait au moyen d'au moins une membrane sélective pour la séparation des lots de protéines et/ou des protéines du petit lait, la filtration (2, 14) du petit-lait étant réalisée au moyen d'une nanofiltration,
- traitement par chauffage (4, 20, 21) des composants retenus au cours de la filtration, et
- fragmentation (7, 21) des composants traités à chaud en particules et/ou en fines particules avec une taille moyenne de particules déterminée.

2. Procédé selon la revendication 1, **caractérisé en ce que** la membrane est utilisée avec une capacité de rétention pour des composants ayant une masse molaire supérieure à 200 kg/kMol, en particulier supérieure à 1000 kg/kMol.

3. Procédé selon la revendication 1 ou 2, **caractérisé en ce qu'**une teneur en protéine d'au moins 30 %, en particulier 50 à 60 % en masse sèche, est atteinte pendant la filtration (2, 14).

4. Procédé selon l'une des revendications 1 à 3, **caractérisé en ce qu'**au moins 60 %, en particulier au moins 80 %, des protéines contenues dans le petit-lait sont retenues pendant la filtration (2, 14).

5. Procédé selon l'une des revendications 1 à 4, **caractérisé en ce que** le traitement par chauffage a lieu sous contrainte mécanique, en particulier sous l'influence d'efforts de cisaillement sur les composants retenus pendant la filtration.

6. Procédé selon l'une des revendications 1 à 5, **caractérisé en ce que** le traitement par chauffage (4, 20, 21) est réalisé à une température comprise entre 60 et 120°C, en particulier entre 70 et 100°C.

7. Procédé selon l'une des revendications 1 à 6, **caractérisé en ce que** le traitement par chauffage (4, 20, 21) est mis en oeuvre sur une période ne dépassant pas une heure, en particulier sur une période allant d'environ 20 s à 30 min.

8. Procédé selon l'une des revendications 1 à 7, **caractérisé en ce que** la taille moyenne de particules des particules fragmentées est incluse dans un intervalle compris entre 0,1 et 50 µm.

9. Utilisation d'un concentré de protéine fabriqué selon l'une des revendications 1 à 8 pour la fabrication de produits alimentaires, en particulier de fromages frais, de produits lactés pour desserts, de pâtisseries, de sucreries ou d'aliments pour animaux.
